(19)

Europäisches Patentamt
European Patent Office
Office européen des brevets

(11) **EP 4 502 953 A1**

(12) **EUROPEAN PATENT APPLICATION**
published in accordance with Art. 153(4) EPC

(43) Date of publication:
**05.02.2025 Bulletin 2025/06**

(21) Application number: 23777637.2

(22) Date of filing: 07.02.2023

(51) International Patent Classification (IPC):
***G06T 13/00*** (2011.01)   ***G06T 3/00*** (2024.01)

(52) Cooperative Patent Classification (CPC):
**G06T 13/40; G06T 19/20;** G06T 3/00;
G06T 2219/2004

(86) International application number:
**PCT/CN2023/074848**

(87) International publication number:
**WO 2023/185258 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 CN 202210353097**

(71) Applicant: **Tencent Technology (Shenzhen)
Company Limited
Shenzhen, Guangdong 518057 (CN)**

(72) Inventors:
• **ZHANG, Yongxiang
Shenzhen, Guangdong 518057 (CN)**
• **LING, Fei
Shenzhen, Guangdong 518057 (CN)**
• **XIA, Fei
Shenzhen, Guangdong 518057 (CN)**
• **DENG, Jun
Shenzhen, Guangdong 518057 (CN)**

(74) Representative: **Nederlandsch Octrooibureau
P.O. Box 29720
2502 LS The Hague (NL)**

(54) **BONE MODEL MERGING METHOD AND APPARATUS, AND DEVICE AND STORAGE MEDIUM**

(57)    Embodiments of this application provide a bone model combination method, apparatus and device, and a computer-readable storage medium. The method provided by the embodiments of this application determines several bone models corresponding to a same common bone from a plurality of to-be-combined bone models, and duplicates and binds final common bone chains for the bone models to build mappings respectively between pixel sets included in bone models having bone conflicts and corresponding common bones in a common skeleton, thereby achieving combination of a plurality of bone models having bone conflicts. By the method of the embodiments of this application, bone models can be efficiently and accurately combined in a case that the plurality of to-be-combined bone models have the bone conflicts, so as to achieve better picture animation displaying to improve the user experience. In addition, the method can also optimize the rendering performance and reduce the complexity of bone model combination.

FIG.2A

**Description**

RELATED APPLICATION

This application claims priority to Chinese Patent Application No. 202210353097.9, entitled "BONE MODEL MERGING METHOD AND APPARATUS, AND DEVICE AND STORAGE MEDIUM" filed with the China National Intellectual Property Administration on March 31, 2022, which is incorporated by reference in its entirety.

FIELD OF THE TECHNOLOGY

This application relates to the field of artificial intelligence, and more particularly, to a bone model combination method, apparatus and device, and a storage medium.

BACKGROUND OF THE DISCLOSURE

At present, a skeleton-driven deformation technology has been a hot topic studied in the field of cambered surface modeling due to its flexible control measure and simple operations. For example, in mainstream game engines, the skeleton-driven deformation technology is usually used to achieve an animation system with mesh deformation driven by bones. In reality, many animal and plant (including human body) models or industrial product models have obvious skeleton features, so motion simulation or a deformation design of a mesh model can be achieved by applying skeleton-driven deformation. A distinctive feature of animals that are different from other organisms is that animals can drive the muscles on the bones to move through bone motions, resulting in various types of motions. The skeleton-driven deformation technology is precisely a mesh deformation measure generated by simulating this motion form. Deformation of a skeleton is manipulated to drive deformation of a mesh model (also referred to as skinning or skin) attached to the skeleton. At present, the skeleton-driven deformation technology has been widely applied to fields such as animation, games, industrial product design, and biomedicine.

In an animation system that uses the skeleton-driven deformation technology to achieve mesh deformation driven by bones, for the same part in a common skeleton, multiple bone models may simultaneously exist, which can be mapped to the part of the common skeleton, and these bone models may separately correspond to multiple different bone animations to be presented simultaneously. For the above situation, during processing of the multiple bone models mapped to the same common bone in the common skeleton, it is usually necessary to bind the multiple bone models to the common bone. It usually leads to bone conflicts, causing some bone models to be lost or animations to be played in error, resulting in abnormal pictures.

SUMMARY

In order to solve the above problems, the present disclosure achieves mapping between a plurality of bone models and a bone duplicate of the conflicting bone by duplicating and binding a conflicting bone, thereby achieving efficient combination of complicated bone models.

Embodiments of the present disclosure provide a bone model combination method, apparatus and device, and a computer-readable storage medium.

The embodiments of the present disclosure provide a method of combining bone models. The method is executable by an electronic device and includes: obtaining a plurality of bone models representing a common skeleton, each comprising a pixel set; determining, for each pair of bone models from the plurality of bone models, a common bone set comprising pixels indicating at least one common bone between the respective pair of bone models; determining, based on the common bone set, a common bone chain; generating a common bone chain duplicate based on the common bone chain, and attaching the common bone chain duplicate to at least one upper common bone of the common bone chain; and constructing a mapping relationship between the common bone chain and a pixel set included in a corresponding bone model of the respective pair of bone models, and constructing a mapping relationship between the common bone chain duplicate and the pixel set included in the corresponding bone model of the respective pair of bone models, to combine the respective pair of bone models.

The embodiments of the present disclosure provide an apparatus for combining bone models. The apparatus includes: a bone model obtaining module, configured to obtain a plurality of bone models representing a common skeleton, each comprising a pixel set; a bone intersection determining module, configured to determine, for each pair of bone models from the plurality of bone models, a common bone set comprising pixels indicating at least one common bone between the respective pair of bone models; a common bone chain determining module, configured to: determine, based on the common bone, a common bone chain; a common bone chain duplication module, configured to: generate a common bone chain duplicate based on the final common bone chain, and attach the common bone chain duplicate to at least one upper common bone of the common bone chain; and a bone mapping constructing module, configured to: construct a mapping relationship between the common bone chain and a pixel set included in a corresponding bone model of the respective pair of bone models, and construct a mapping relationship between the common bone chain duplicate and the pixel set included in the corresponding bone model of the respective pair of bone models, to combine the respective pair of bone models.

The embodiments of the present disclosure provide a device for combining bone models, including: one or more processors; and one or more memories, the one or more memories storing a computer-executable program, when executing the computer-executable program, the processor performing the above-mentioned bone model combination method.

The embodiments of the present disclosure provide a computer-readable storage medium, storing computer-executable instructions, the instructions, when executed by a processor, being used for implementing the above-mentioned bone model combination method.

The embodiments of the present disclosure provide a computer program product or a computer program. The computer program product or computer program includes computer instructions which are stored in a computer-readable storage medium. A processor of a computer device reads the computer instructions from the computer-readable storage medium and executes the computer instructions, causing the computer device to perform the bone model combination method according to the embodiments of the present disclosure.

For any two bone models among a plurality of to-be-combined bone models, the method provided by the embodiments of the present disclosure can determine an intersection between common bone sets respectively corresponding to the two bone models. If the intersection includes a common bone, it indicates that the two bone models have a bone conflict. Common bone chain duplication and binding can be performed on these bone models having the bone conflicts. Specifically, for all common bones in the intersection, final common bone chains are determined, so that final common bone chain duplicates are generated on the basis of the final common bone chains, and the final common bone chain duplicates are bound to upper common bones of the final common bone chains to complete the duplication and binding of the common bone chains. Afterwards, a mapping between the final common bone chains and a pixel set included a corresponding bone model of the two bone models is built, and a mapping between the final common bone chain duplicates bound with the upper common bones and a pixel set included in a corresponding bone model of the two bone models is built, so as to combine the bone models having the bone conflicts. By the method of the embodiments of the present disclosure, bone models can be efficiently and accurately combined in a case that the plurality of to-be-combined bone models have the bone conflicts, so that all bone models corresponding to the same common bone can be integrally maintained, and all corresponding bone animations can be achieved, which avoids bone model loss and animation playing errors due to the bone conflicts, so as to achieve better picture animation displaying to improve the user experience. The method of the embodiments of the present disclosure is applicable to combining complicated bone models and multi-character bone models, and is decoupled from a game engine and tool. In addition, the method can also optimize the rendering performance and reduce the complexity of bone model combination.

BRIEF DESCRIPTION OF THE DRAWINGS

In order to describe the technical solutions of the embodiments of the present disclosure more clearly, the following briefly describes the accompanying drawings required for describing the embodiments. Apparently, the accompanying drawings in the following description show only some embodiments of the present disclosure, and a person of ordinary skill in the art may still derive other drawings from these accompanying drawings without creative work.

FIG. 1A shows a schematic diagram of a scenario of processing a combination request from a user terminal according to the embodiments of the present disclosure.

FIG. 1B shows a schematic diagram of a plurality of to-be-combined bone models according to the embodiments of the present disclosure.

FIG. 1C shows a schematic diagram of combining a plurality of bone models according to the embodiments of the present disclosure.

FIG. 2A shows a flowchart of a bone model combination method according to the embodiments of the present disclosure.

FIG. 2B shows a schematic flowchart of a bone model combination according to the embodiments of the present disclosure.

FIG. 3 shows a schematic diagram of an example common skeleton according to the embodiments of the present disclosure.

FIG. 4A shows a schematic diagram of bone binding in example bone models according to the embodiments of the present disclosure.

FIG. 4B shows a schematic diagram of a mesh in example bone models according to the embodiments of the present disclosure.

FIG. 4C shows a schematic diagram of an influence of a bone in example bone models on a pixel according to the embodiments of the present disclosure.

FIG. 5 shows a schematic diagram of duplicating and binding a common bone chain duplicate according to the embodiments of the present disclosure.

FIG. 6 shows a schematic diagram of rendering, invoking, and comparison before and after reconstruction of vertex indexes according to the embodiments of the present disclosure.

FIG. 7 shows a schematic diagram of description and construction of an example scenario according to the embodiments of the present disclosure.

FIG. 8 shows a schematic diagram of a bone model combination apparatus according to the embodiments of the present disclosure.

FIG. 9 shows a schematic diagram of a bone model combination device according to the embodiments of the present disclosure.

FIG. 10 shows a schematic diagram of an exemplary computing device according to the embodiments of the present disclosure.

FIG. 11 shows a schematic diagram of a storage medium according to the embodiments of the present disclosure.

DESCRIPTION OF EMBODIMENTS

In order to make the objectives, technical solutions, and advantages of the present disclosure clearer, the following will describe in detail the exemplary embodiments of the present disclosure with reference to the accompanying drawings. Apparently, the described embodiments are merely some but not all of the embodiments of the present disclosure. It should be understood that, the present disclosure is not limited by the exemplary embodiments described herein.

In this specification and the accompanying drawings, steps and elements that are essentially the same or similar are represented by identical or similar reference numerals, and repeated descriptions of these steps and elements will be omitted. In addition, in the descriptions of the present disclosure, the terms "first", "second", and the like are only for the purpose of distinguishing the description, and may not be understood as indicating or implying the relative importance or a sequence.

Unless otherwise defined, meanings of all technical and scientific terms used in this specification are the same as those usually understood by a person skilled in the art to which the present disclosure belongs. Terms used herein are merely intended to describe objectives of the embodiments of the present disclosure, but are not intended to limit the present disclosure.

For the convenience of describing the present disclosure, the following introduces concepts related to the present disclosure.

A bone model combination method of the present disclosure can be achieved on the basis of artificial intelligence (AI). AI involves a theory, a method, a technology, and an application system that use a digital computer or a machine controlled by the digital computer to simulate, extend, and expand human intelligence, perceive an environment, obtain knowledge, and use knowledge to obtain an optimal result. In other words, AI is a comprehensive technology in computer science and attempts to understand the essence of intelligence and produce a new intelligent machine that can react in a manner similar to human intelligence. For example, an artificial intelligence-based bone model combination method can establish association between a plurality of to-be-combined bone models by similar recognition with human eyes and determining their relationships, thereby combining the plurality of bone models. AI studies the design principles and implementation methods of various intelligent machines, so that the bone model combination method of the present disclosure has functions of accurately determining conflicting bones between a plurality of to-be-combined bone models in real time and performing bone duplication and mapping on the basis of the conflicting bones, thereby efficiently combining the plurality of bone models having bone conflicts.

The bone model combination method of the present disclosure can involve a skeleton-driven deformation technology. The skeleton-driven deformation technology is also referred to as a skeleton-driven mesh deformation method. As an important free-form deformation method, the skeleton-driven deformation technology has a main idea of comparing deformation of a three-dimensional mesh with motions of animals (including human bodies), associating points (a skin) on a surface of the mesh with a skeleton structure, and mesh deformation is driven by motions of bones. The method is easy and intuitive to operate and is suitable for being applied to motion deformation, and the built skeleton model can be repeatedly used, so it is widely used in fields such as human animation and games. The skeleton-driven deformation technology can generally be considered as a deformation technology that is performed to simulate motions of animals. The essence is to drive the geometric model to deform by editing a skeleton of a geometric model, that is, deformation of a surface region of a mesh model is driven by the deformation of a corresponding constraint bone of the mesh model.

The bone model combination method of the present disclosure can also involve a skinning deformation technology. Mesh skin deformation caused by bone motion is usually referred to as skinning deformation, where a surface mesh skin is skinning. When skinning vertexes in a skin deformation animation are only affected by a single bone, unnatural skin deformation distortion may occur. To alleviate this phenomenon, multiple bones are generally applied simultaneously to vertexes of a certain mesh skin, which is to bind the mesh skin to the multiple bones to comprehensively generate deformation of the mesh skin. There are various skinning deformation methods that associate multiple bones with a mesh skin, among which, common skinning deformation methods include a Linear Blending Skinning (LBS) deformation method. The LBS deformation method establishes local joint operators for a human skeleton to drive local bone motion to cause local deformation of a mesh skin. Deformation is generated by linear blending of vertexes of the skin and a plurality of associated bones. This method is also commonly referred to as Joint-dependent Local Deformation (OLD) or skeleton subspace deformation. Specifically, in the LBS method, the vertexes of the mesh skin are blended with the bones bound to the vertexes; a weight is assigned to a contribution degree of each bone to the deformation of the vertexes of the skin; and the weight of each bone that affects the skin is linearly blended to obtain a more realistic skinning deformation effect. It is understood that the present disclosure only takes the LBS method mentioned above as an example and not as a limitation to perform skinning deformation. Therefore, other skinning deformation algorithms that can achieve similar effects can also be applied to the bone model combination method of the present disclosure.

In summary, schemes provided by the embodiments of the present disclosure involve technologies such as the AI, the skeleton-driven deformation, and the skinning deformation. It is noted that, the bone model combination method provided in the embodiments of the present disclosure can be executed by a bone model combination device. The bone model combination device can be a server or a user terminal. The bone model combination method provided in the embodiments of the present disclosure will be further described in conjunction with the accompanying drawings.

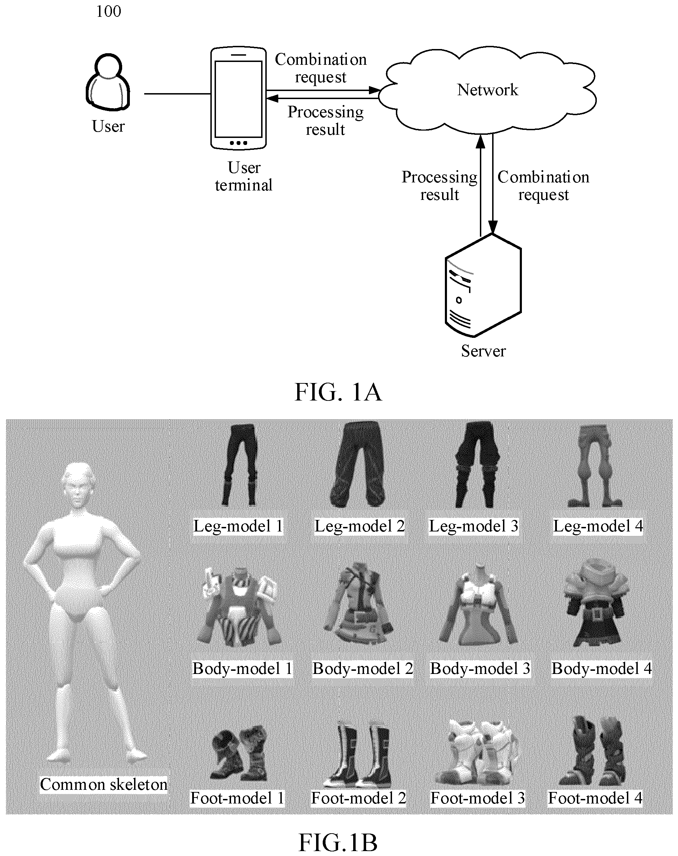

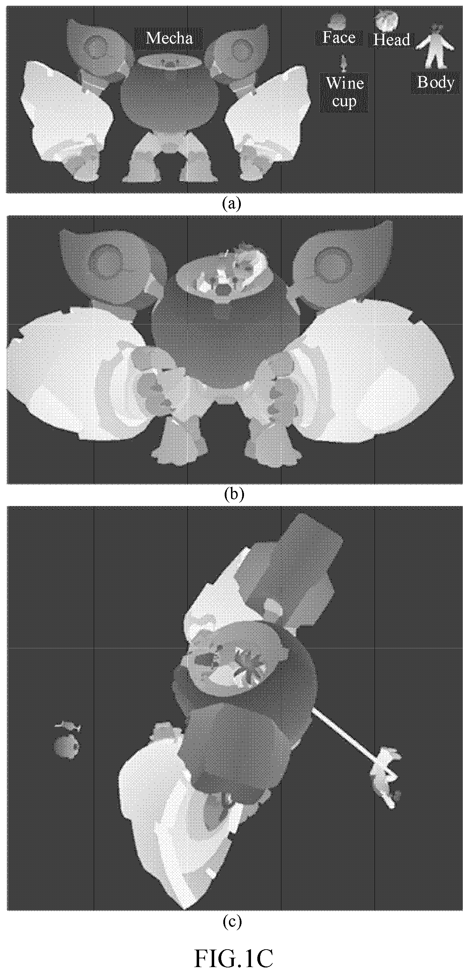

FIG. 1A shows a schematic diagram of a scenario 100 of processing a combination request from a user terminal according to the embodiments of the present disclosure. FIG. 1B shows a schematic diagram of an example scenario of a plurality of to-be-combined bone models according to the embodiments of the present disclosure. FIG. 1C shows a schematic diagram of combining a plurality of bone models according to the embodiments of the present disclosure.

In a user terminal that presents two-dimensional or three-dimensional animations to a user, the user can obtain a desired effect by operating displayed pictures on the user terminal. For example, for an online game installed on the user terminal, the user can control game pictures through interaction with the user terminal (such as touch control or peripheral device control), and initiate a combination request for a plurality of bone models by, for example, selecting bone models in the game pictures (for example, one or more of models in a role item replacement interface as shown in FIG. 1B). Then, the user terminal can transmit data to a server of the application through a network for processing by the server.

In one possible implementation, the user terminal may specifically include a smart phone, a tablet, a laptop, a vehicle-mounted terminal, a wearable device, and the like. The user terminal may also be a client with a browser or various applications (including a system application and a third-party application). The network may be an Internet of Things based on the Internet and/or telecommunication network. It can be a wired network or a wireless network, for example, an electronic network that can achieve an information exchange function, such as a local area network (LAN), a metropolitan area network (MAN), a wide area network (WAN), and a cellular data communication network. The server may be an independent physical server, or may be a server cluster or a distributed system formed by a plurality of physical servers, or may be a cloud server that provides basic cloud computing services such as cloud services, cloud databases, cloud computing, cloud functions, cloud storage, network services, cloud communication, middleware services, domain name services, security services, Content Delivery Networks (CDNs), big data, and artificial intelligence platforms.

As shown in FIG. 1A, the server can perform related processing on a combination request from the terminal on the basis of received user data (for example, information about names of the selected bone models). Afterwards, the server can return a determined processing result corresponding to the combination request to the user terminal through the network and display corresponding pictures, thereby completing a response to the combination request of the user.

The above processing performed on the combination request by the server is usually based on the skeleton-driven deformation technology, which is a deformation technology that simulates a motion way of animals. That is, the deformation of a surface mesh of a bone model is driven by the deformation of a corresponding constraint bone of the bone model, and the motion simulation or deformation design of a bone model is achieved by applying the skeleton-driven deformation. Combination of bone models can include combination of bones and meshes included in the bone models, and respective bone animations of the plurality of combined bone models also need to be displayed on the combined bone models.

However, in an animation system that uses the skeleton-driven deformation technology to achieve mesh deformation driven by bones, for the same part in a common skeleton, multiple bone models may simultaneously exist, which can be mapped to the part of the common skeleton, and these bone models may separately correspond to multiple different bone animations to be presented simultaneously. Usually, during combination bone model sets collected from a scenario, it is necessary to bind each bone model in the bone model sets to a common skeleton separately. For the above multiple-to-one situation, during processing of the multiple bone models mapped to the same common bone in the common skeleton, it is usually necessary to bind the multiple bone models to the common bone. It usually leads to bone conflicts, causing some bone models to be lost or animations to be played in error, resulting in abnormal pictures.

As an example, for a role item replacement scenario as shown in FIG. 1B, a user can select one or more of the shown bone models (models on the right side of a common skeleton in FIG. 1B, such as leg-model 1 and foot-model 3) to combine a corresponding common bone in the common skeleton. For example, the user can combine body-model 1, leg-model 2, and foot-model 4. Since the three bone models do not overlap between corresponding common bones of the common skeleton, there is no bone conflict between the three bone models, and the bone models can be directly combined. However, when the user tries to combine leg-model 4 with any one of foot-models 1, 2, 3, and 4, since common bones corresponding to leg-model 4 in the common skeleton include two common bone parts: the legs and the feet, while foot-models 1, 2, 3, and 4 all correspond to the feet common bones. When leg-model 4 is combined with any one of foot-models 1, 2, 3, and 4, common bone overlapping may occur. Therefore, binding these to-be-combined bone models to the common bones will cause a problem of bone conflicts.

As shown in FIG. 1C, for the five to-be-combined bone models (shown as the body, the head, the face, the wine cup, and mecha) shown in FIG. 1C(a). FIG. 1C(b) shows correct combined states of the five bone models. However, due to bone conflicts between the bone models, such as: between the body and the mecha, between the wine cup and the mecha, and between the head and the face, an example of the combination results presented using the aforementioned bone combination method can be seen in FIG. 1C(c), where positional relationships of the five bone models are disordered. The head and the mecha are successfully combined, but the other three bone models are discarded due to the bone conflicts, resulting in abnormal displaying. Furthermore, bone animations corresponding to these bone models are not normally played either.

Therefore, there is a need for a method that can achieve correct combination of a plurality of bone models in the presence of bone conflicts. Based on this, the present disclosure provides a bone model combination method, which solves the combination conflict caused by the bone conflicts by determining overlapping parts between bone models having bone conflicts and performing corresponding processing on the overlapping parts.

Compared with the bone model combination method provided in the related technology, the method provided in the embodiments of the present disclosure can integrally maintain all bone models corresponding to the same common bone and achieve all corresponding bone animations, which avoids bone model loss and animation playing errors due to the bone conflicts.

The method provided by the embodiments of the present disclosure determines several bone models corresponding to a same common bone from a plurality of to-be-combined bone models, and duplicates and binds a common bone chain for the bone models to build mappings respectively between pixel sets included in bone models having bone conflicts and corresponding common bones in a common skeleton, thereby achieving combination of a plurality of bone models having bone conflicts. By the method of the embodiments of the present disclosure, bone models can be efficiently and accurately combined in a case that the plurality of to-be-combined bone models have the bone conflicts, so as to achieve better picture animation displaying to improve the user experience. The method of the embodiments of the present disclosure is applicable to combining complicated bone models and multi-character bone models, and is decoupled from a game engine and tool. In addition, the method can also optimize the rendering performance and reduce the complexity of bone model combination.

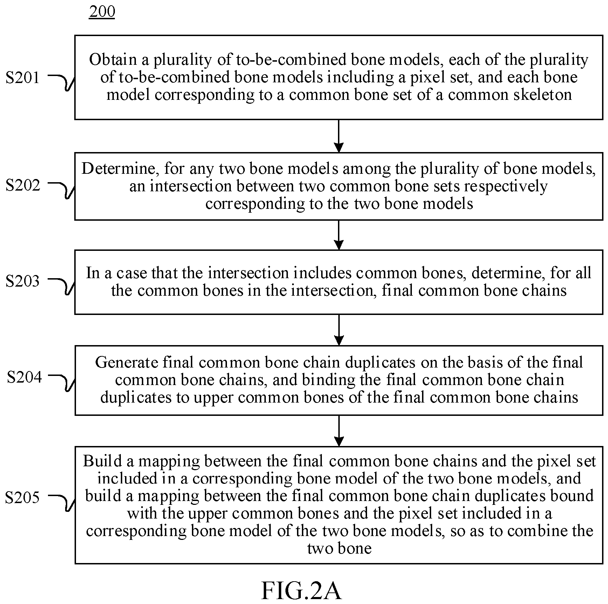

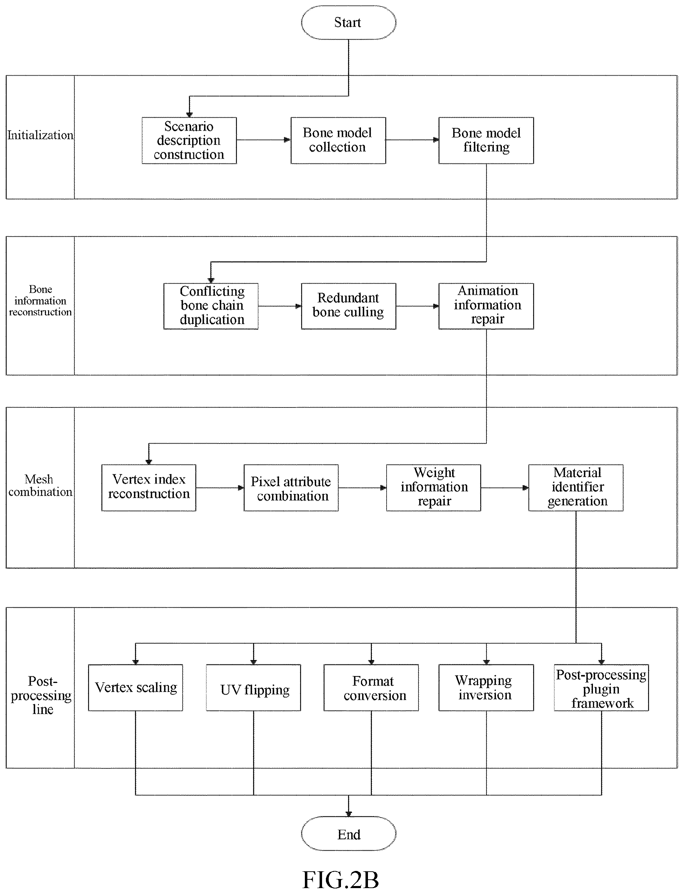

FIG. 2A shows a flowchart of a bone model combination method 200 according to the embodiments of the present disclosure. FIG. 2B shows a schematic flowchart of a bone model combination method according to the embodiments of the present disclosure.

As shown in FIG. 2A and FIG. 2B, the bone model combination method 200 may include step 201 to step 205, and an actual process of bone model combination may include four sections: initialization, bone information reconstruction, mesh combination, and post-processing line. There may be a correspondence relationship between the steps of the method 200 and the actual process. For example, step 201 may correspond to the initialization section, while step 202 to step 205 may correspond to the processing of the bone information reconstruction section.

As shown in FIG. 2B, in bone model combination, initialization needs to be performed first, including scenario description construction, bone model collection, and bone model filtering.

In step 201, a plurality of to-be-combined bone models may be obtained, each of the plurality of to-be-combined bone models may include a pixel set, and each bone model corresponds to a common bone set of a common skeleton. For example, a plurality of bone models are obtained, and each includes a pixel set.

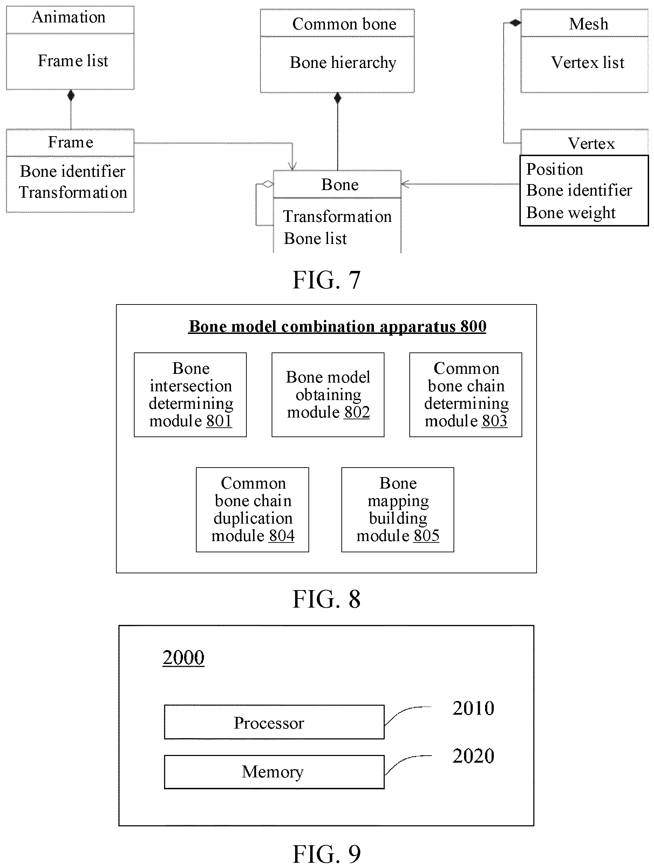

In one possible implementation, the execution of step 201 corresponds to the bone model collection and bone model filtering mentioned above. For example, the obtaining of the plurality of to-be-combined bone models may be achieved by a user by performing a selection operation in a user terminal, while unselected bone models are correspondingly filtered. In addition, for clarity, the scenario description construction section in the initialization operation will be described below with reference to FIG. 7.

According to the embodiments of the present disclosure, the common skeleton may be composed of a plurality of common skeletons, and there is a hierarchical relationship between the plurality of common skeletons.

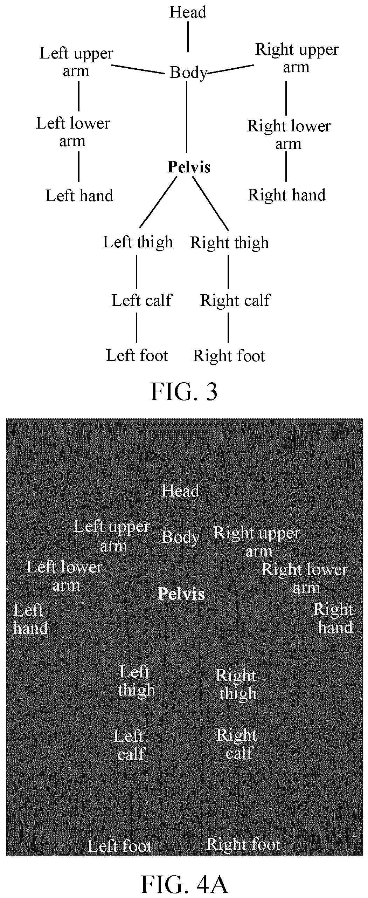

As mentioned above, the plurality of bone models may be combined on the basis of the common skeleton. As an example, FIG. 3 shows a schematic diagram of an example common skeleton according to the embodiments of the present disclosure. As shown in FIG. 3, the common skeleton may include a common bone root node and include one or more common bone chains on the basis of the common bone root node.

For example, in the figure, the pelvis is used as the common bone root node, and nodes located at a lower layer of the root node may include three nodes: the body, the left thigh, and the right thigh. These nodes may each include corresponding lower nodes and further lower nodes. Therefore, in the case of the aforementioned example, the common skeleton may include common bone chains, such as pelvis-left thigh-left calf-left foot, pelvis-body-head, and pelvis-body-right upper arm-right lower arm-right hand. It is understood that the definition and selection of root node and its lower nodes may be set according to practical applications and needs. The form of the common skeleton used in the present disclosure is only used as an example and not a limitation. Other common skeletons that include more or fewer bones, as well as those common skeletons based on different hierarchical division methods, can also be applied to the bone model combination method of the present disclosure.

In one possible implementation, the hierarchical relationship between the plurality of common bones may be based on a motion manner of hierarchical bones between these common bones. Each bone in the same common bone chain may be represented as an abstract representation of a transformation matrix, that is, relative transformation of the bone relative to an upper common bone (for example, motion of the shoulders may drive the arms, the fingers, and the like to move, so transformation of the arms and fingers may be represented as transformation of the arms and fingers relative to the upper common bone). Therefore, calculation of transformation of a lower common bone may be converted into recursive calculation of the transformation of the upper common bones based on hierarchical relationship (namely, from local transformation to global transformation).

In addition, due to the hierarchical relationship between the bones, if an intermediate layer of bone between two layers of bones is lost, the motion of the lower bone may be disordered. Therefore, in subsequent bone model combination processing, subsequent bone model combination processing is performed on the basis of a common bone chain, instead of a single bone.

According to the embodiments of the present disclosure, each of the plurality of bone models further includes a bone set. The bone model may correspond to a common bone set of the common skeleton on the basis of the bone set of the bone model.

FIG. 4A shows a schematic diagram of bone binding in example bone models according to the embodiments of the present disclosure.

A skeleton of the example bone models shown in FIG. 4A adopts the structure of the common skeleton as shown in FIG. 3. The pelvis is used as the root node, thereby including a plurality of common bone chains based on the pelvis. The bone set included in each bone model may be determined on the basis of the common skeleton mentioned above, or may be determined on the basis of other bone division methods. The present disclosure does not limit this, and a correspondence relationship between the bone set in the bone model and the common bones of the common skeleton, such as, mapping between the respective bone models and human parts. For the common skeleton, each bone model may determine a common bone set corresponding to the bone model in the common skeleton on the basis of the correspondence relationship between the bone set of the bone model and the common skeleton. For example, the bone set of leg-model 4 in FIG. 1B may include {legs, feet}, and the common bone set corresponding to the bone model in the common skeleton may include {pelvis, left thigh, left calf, left foot, right thigh, right calf, and right foot}.

According to the embodiments of the present disclosure, each pixel in one pixel set includes a plurality of vertexes, and each vertex has a bone indicator; and the bone indicator is used for indicating a bone identifier corresponding to the vertex. In one possible implementation, each bone model may include both a bone part and a mesh part, where a bone and a mesh can have mapping relationships based on the correspondence relationship between the bone model and the common skeleton. The bone can drive the mesh to change through motion transformation, and the mesh is a pixel set used for expressing objects in a three-dimensional space.

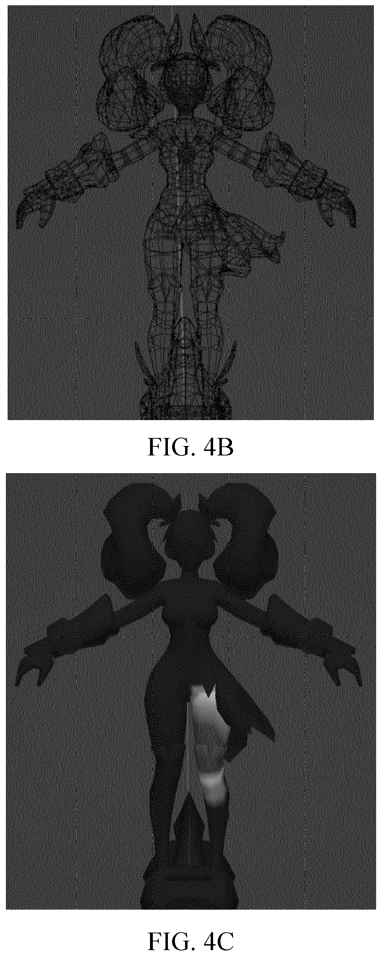

FIG. 4B shows a schematic diagram of a mesh in an example bone model according to the embodiments of the present disclosure. As shown in FIG. 4B, the mesh of the bone model is composed of a large number of pixels. These pixels may be various planar or curved shapes, such as triangles or quadrangles. Each pixel may include a plurality of vertexes on the basis of its shape division. These vertexes may be influenced by one or more bones associated with the pixel.

**In** one possible implementation, the above-mentioned pixel set may be a set of pixels having a mapping relationship with the common bone set corresponding to the bone model in the common skeleton. The bone identifiers of the vertexes of each pixel in the pixel set may point to bones related to one common bone in the common bone set. A specific description may refer to step 205 described below.

**In** one possible implementation, the foregoing influence of one or more bones associated with the pixel on the vertexes of the pixel may be as shown in FIG. 4C. FIG. 4C shows a schematic diagram of an influence of a bone in an example bone model on a pixel according to the embodiments of the present disclosure.

As mentioned above, when the vertexes of the pixel are only affected by a single bone, unnatural pixel deformation distortion may occur. In order to relieve this phenomenon, a plurality of bones may be usually used to act on one vertex, that is, the pixel is associated with a plurality of bones to jointly generate more natural pixel deformation, thereby generating a more realistic bone animation.

In one possible implementation, the vertexes of each pixel may be blended with one or more bones associated with the pixel. For example, for the vertexes of each pixel of the pixel set, the bones associated with the vertexes are obtained, and influence weight values of the bones associated with the vertexes on the vertexes may be determined. Then, the influence weight value of each bone on the vertex may be blended to determine a vertex after transformation. The method for determining the influence weight values of the bones associated with the vertexes on the vertexes may include determining a contribution degree of each bone to deformation of the vertex as the influence weight value of the bone on the vertex. The blending of the influence weight value of each bone on the vertex may be linear blending, and the embodiments of the present disclosure do not limit this.

For example, in a case of the above linear blending, it is assumed that a global transformation matrix of bone j in a bone model is $B_j$, and vertex $v_i$ is transformed due to the influence of a plurality of bones, the vertex $v_i'$ after transformation may be represented as $v_i' = \sum_j w_{ij} B_j v_i$; and $\sum_j w_{ij} = 1$, where $w_{ij}$ is the influence weight of bone j on current vertex i. Of course, the aforementioned linear blending representation is only used as an example and not a limitation in the present disclosure. This example is only used for explaining the concept of the influence weight value and is not intended to limit skinning deformation to linear blending skinning.

As shown in FIG. 4C, each bone may have an influence on the vertexes of some pixels, and the bone has a corresponding influence weight on the affected vertexes of the pixels. A higher influence weight value indicates a higher influence degree. When the influence weight value is zero, the bone will not have any influence on the vertexes. In FIG. 4C, the bone of the right thigh of the bone model is taken as an example to illustrate the influence of the bone on the vertexes of the pixels. A darker gray color (excluding other parts except for the right leg bone model) indicates a larger influence weight value. That is, if the value of $w_{ij}$ described above is larger, the transformation of vertex $v_i$ is influenced more greatly by the transformation $B_j$ of bone j.

In step 202, for any two bone models among the plurality of bone models, an intersection of common bone sets respectively corresponding to the two bone models is determined. For example, for each pair of models consisting of two distinct bone models among the plurality of bone models, an intersection of common bone sets respectively corresponding to the respective two bone models is determined.

The intersection of the two common bone sets corresponding to the above two bone models may indicate overlapping bones (namely, conflicting bones) of the two bone models relative to the common skeleton. These overlapping bones will cause a combination conflict under a conventional method. Therefore, in a case that the intersection of the two common bone sets corresponding to the two bone models is not an empty set (that is, there is at least one overlapping bone), bone model combination can be performed for the intersection.

In one possible implementation, for any two bone models (Mesh$_a$, Mesh$_b$) among the plurality of bone models, assuming that there is common bone set Skel of the common skeleton, the two common bone sets corresponding to the two bone models are Skel$_A$ and Skel$_B$, respectively, where Skel$_A \subseteq$ Skel and Skel$_B \subseteq$ Skel; and combination of the two bone models may be regarded as building a mapping from Mesh$_a$ to Skel$_A$ and a mapping from Mesh$_a$ to Skel$_B$. In one possible implementation, the intersection of Skel$_A$ and Skel$_B$ may be represented as set S, that is, S = Skel$_A \cap$ Skel$_B$.

Therefore, in one possible implementation, if S = ∅, it indicates that there is no bone conflict between the two bone models (Mesh$_a$, Mesh$_b$), so the two bone models may be combined normally, for example, a next stage (for example, a mesh combination stage in FIG. 2B) is executed.

In a case of S ≠ ∅, the bone model combination may be performed on set S. The combination operation may include conflicting bone chain duplication, redundant bone culling, and animation information repair as shown in FIG. 2B.

In step 203, in a case that the intersection includes common bones, final common bone chains are determined for all the common bones in the intersection. For example, for all the common bones in the intersection, common bone chains are determined.

In one possible implementation, for set S, considering that set S corresponds to a set of overlapping bones of the aforementioned two bone models relative to the common skeleton, it is necessary to determine a final common bone chain for each overlapping bone one by one, and each final common bone chain includes at least one overlapping bone.

According to the embodiments of the present disclosure, step 203 may include: in a case that the intersection includes common bones, determining, for all the common bones in the intersection, the final common bone chains on the basis of the hierarchical relationship between all the common bones.

In one possible implementation, all the common skeletons in the final common bone chains are ordered and sequenced according to the above hierarchical relationship of the common skeleton. For example, serial numbers of layers corresponding to the common bones in one final common bone chain from top to bottom is from large to small.

In one possible implementation, for all the common bones in the above intersection, a to-be-confirmed common bone chain may be determined for each common bone, and then a to-be-confirmed common bone chain set that can cover all the common bones in the intersection and has a smallest quantity of to-be-confirmed common bone chains is selected as the above final common bone chains from all the determined to-be-confirmed common bone chains.

According to the embodiments of the present disclosure, the determining, for the all the common bones in the intersection, the final common bone chain on the basis of the hierarchical relationship between all the common bones may include: determining a common bone chain set that can cover all the common bones and has a smallest quantity of common bone chains, so as to determine the final common bone chains according to the common bone chain set, where the same final common bone chain does not contain two or more common bones belonging to the same layer.

In one possible implementation, one to-be-confirmed common bone chain may be determined for each of all the common bones, and the above final common bone chains are determined according to all the determined to-be-confirmed common bone chains. For example, the above to-be-confirmed common bone chain determined for each common bone may be a common bone chain with any length, which takes the common bone as a start point (namely, the common bone is used as the uppermost bone in the common bone chain). The common bone chain includes one or more of lower common bones of the common bone (in a case that there are lower common bones of the common bone). Therefore, there may be intersections among the plurality of determined to-be-confirmed common bone chains. In order to reduce the quantity of the common bone chains in the common bone chain set, it is necessary to combine the to-be-confirmed common bone chains with the intersections to generate the longest common bone chain with the common bones arranged in sequence according to the hierarchical relationship, as one of the final common bone chains mentioned above. If there a plurality of final common bone chains, the common bones included in each common bone chain are arranged in sequence in one direction according to the hierarchical relationship (for example, a gradual increasing or decreasing hierarchical relationship), that is, the common bone chains do not have branches.

In addition, in order to achieve the same purpose as the above method, the determined common bone chains can also be of a tree-like structure different from the above method, that is, each common bone chain may include two or more common bones on the same layer.

According to the embodiments of the present disclosure, the determining, for the all the common bones in the intersection, the final common bone chain on the basis of the hierarchical relationship between all the common bones may include: taking, for each common bone among all the common bones, the common bone and all lower common bones corresponding to the common bone in the common skeleton as a to-be-confirmed common bone chain; and for any two to-be-confirmed common bone chains among all the to-be-confirmed common bone chains corresponding to all the common bones, removing, in a case that the two to-be-confirmed common bone chains have an inclusion relationship, a to-be-confirmed common bone chain with fewer common bones from the two to-be-confirmed common bone chains to obtain the final common bone chain. According to the embodiments of the present disclosure, the upper common bones and the lower common bones of the final common bone chains are determined on the basis of the hierarchical relationship.

In one possible implementation, the to-be-confirmed common bone chain determined for each common bone may be a common bone chain which takes the common bone as a start point and includes all the lower common bones of the common bone (for example, when the common bone includes a plurality of lower common bones belonging to the same layer, the common bone chain may be of a tree-like structure). Therefore, one to-be-confirmed common bone chain may be determined for each common bone in the intersection. According to the formation of the common bone chains mentioned above, the to-be-confirmed common bone chains corresponding to the common bones in the intersection may overlap (that is, having an inclusion relationship). For example, for the common skeleton shown in FIG. 3, when the intersection includes the body and the right lower arm, the to-be-confirmed common bone chain corresponding to the body may include the to-be-confirmed common bone chain corresponding to the right lower arm. Therefore, for any two to-be-confirmed common bone chains, having the inclusion relationship, among all the to-be-confirmed common bone chains corresponding to all the common bones in the intersection, the to-be-confirmed common bone chain including a fewer of common bones may be removed, while the other common bone chain may be maintained as the final common bone chain.

As an example, in a case of $S = Skel_A \cap Skel_B \neq \emptyset$ described above, the common skeleton may be regarded as a data structure similar to a tree, and S may be regarded as a sub-node set of the tree. Therefore, n subtrees (n to-be-confirmed common bone chains) are determined according to all nodes (for example, n nodes) in S described above, so as to form to-be-confirmed subtree set T'. For any two subtrees A and B in to-be-confirmed subtree set T', if A and B have an inclusion relationship, and $A \subseteq B$, subset A is removed from set T', while superset B is maintained. Therefore, through the above operation, new subtree set T can be generated, that is, a set of the above-mentioned final common bone chains.

It is understood that the above two definitions of the form of the final common bone chain are only used as an example for determining the final common bone chains, not a limitation, in the present disclosure. Other forms of final common bone chains to achieve the same effects can also be applicable to the bone model combination method of the present disclosure.

In step 204, final common bone chain duplicates are generated on the basis of the final common bone chains, and the final common bone chain duplicates are bound to upper common bones of the final common bone chains. For example, common bone chain duplicates are generated based on the common bone chains, and the common bone chain duplicates are bound at upper common bones of the common bone chains.

As mentioned above, in a case of a bone conflict, two or more bone models correspond to the same bone (a conflicting bone) of the common skeleton. For the conflicting bone, two or more bone animations associated with the two or more bone models need to be performed, but this is hardly achieved for the single conflicting bone. Therefore, bone duplicates which are associated with the conflicting bone and do not affect each other. Bone animations can be performed on these bone duplicates. These bone duplicates may correspond to the same common bone, and are jointly bound to upper common bones of the common bone, so that these bone duplicates can be affected by transformation of the upper common bones, and the transformation of the upper common bones can be recursively calculated according to the hierarchical relationship, so as to obtain transformation of these bone duplicates.

According to the embodiments of the present disclosure, the generating final common bone chain duplicates on the basis of the final common bone chains includes: duplicating all the common bones in the final common bone chains and the hierarchical relationship of the common bones to obtain the final common bone chain duplicates, where each common bone in the final common bone chain duplicates and each common bone in the final common bone chains have different bone identifiers.

In one possible implementation, the final common bone chain duplicates may include common bone duplicates that correspond to the original common bones but have different bone identifiers, and arrangement (namely, the hierarchical relationship) of these common bone duplicates in the final common bone chain duplicates is consistent with arrangement of the corresponding original common bones in the original common bone chains.

For example, for each subtree $T_i$ in subtree set T mentioned above, a parent node (denoted as $F_i$) of the subtree is determined, and subtree $T_i$ is duplicated to obtain a subtree duplicate $T_i'$. Therefore, the subtree duplicate $T_i'$ can be bound to parent node $F_i$, thereby generating a new common skeleton corresponding to the to-be-combined bone models, so as to map these bone models to the new common skeleton.

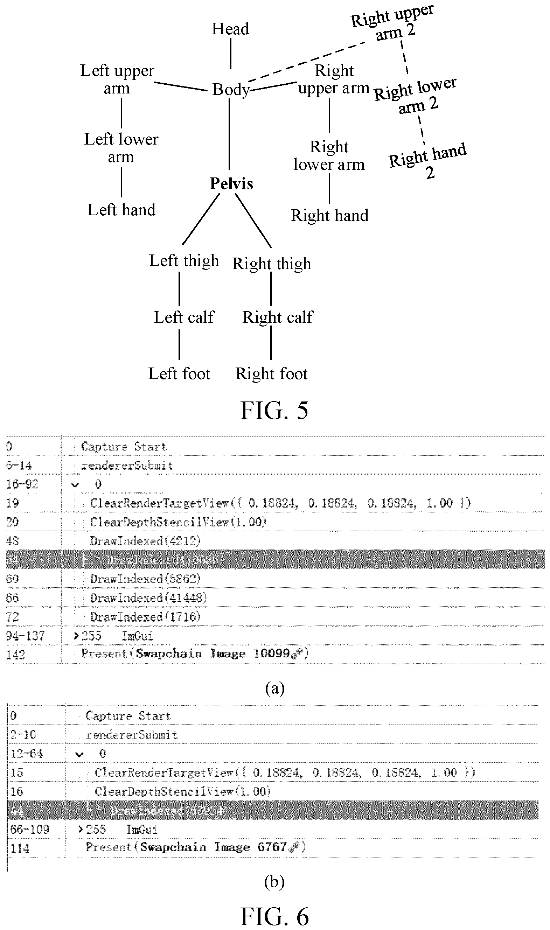

FIG. 5 shows a schematic diagram of duplicating and binding a common bone chain duplicate according to the embodiments of the present disclosure. As shown in FIG. 5, assuming that the common skeleton as shown in FIG. 3 has already existed (which is connected by a solid line in FIG. 5), in a case that there is a final common bone chain composed of right upper arm-right lower arm-right hand, the corresponding final common bone chain duplicate may be right upper arm 2-right lower arm 2-right hand 2. Furthermore, similar to the original common bone chain, the uppermost common bone duplicate (right upper arm 2) in the final common bone chain duplicate is bound to the upper common bone (the body) of the corresponding original common bone (the right upper arm), as shown by the bone chain connected by dotted lines in FIG. 5.

In addition, according to the embodiments of the present disclosure, in some cases, the final common bone chain may not have an upper common bone. In this case, in order to achieve the binding operation, in a case that the final common bone chain does not have an upper common bone, a temporary upper common bone can also be established first. In this case, the method for binding the final common bone chain duplicate to the upper common bone of the final common bone chain may be binding the final common bone chain and the final common bone chain duplicate to the temporary upper common bone, respectively.

Due to the hierarchical relationship in the motion transformation between bones and the direct influence of upper bones on motions of lower bones, in a case that there are no upper common bones for a common bone, the common bone and its common bone duplicate cannot be associated. Therefore, in one possible implementation, a temporary upper common bone of the common bone can be established as an association node between the common bone and its common bone duplicate.

For example, the intersection of the two common bone sets mentioned above includes the uppermost common bone in the common skeleton (such as the pelvis as shown in FIG. 3), since the common bone does not have an upper common bone, a temporary upper common bone may be established to bind both the common bone (and its final common bone chain) and the common bone duplicate (and its final common bone chain duplicate) corresponding to the common bone to the same upper common bone, thus being related to transformation of the same upper common bone.

In one possible implementation, a common bone and a common bone duplicate which correspond to a conflicting bone may have different bone identifiers (for example, the final common bone chain {right upper arm-right lower arm-right hand} and the final common bone chain duplicate {right upper arm 2-right lower arm 2-right hand 2} shown in FIG. 5), and bone models respectively corresponding to the common bone and the common bone duplicate also have different bone identifiers, so that the pixel sets (meshes) of these bone models may be mapped to the common bone or the common bone duplicate through the unique bone identifiers of the bone models.

In step 205, a mapping between the final common bone chains and the pixel set included in a corresponding bone model of the two bone models is built, and a mapping between the final common bone chain duplicates bound with the upper common bones and the pixel set included in a corresponding bone model of the two bone models is built, so as to combine the two bone models. For example, a mapping is constructed between each of the common bone chains and a pixel set included in a corresponding bone model of the two bone models, and a mapping is constructed between each of the common bone chain duplicates bound at the upper common bones and a pixel set included in a corresponding bone model of the two bone models.

In one possible implementation, after the duplication and binding of the final common bone chains corresponding to the conflicting bone are completed, in order to display the bone animations of the respective bone models normally, the pixel sets of the respective bone models may be associated with the generated new common skeleton (including the final common bone chains and the final common bone chain duplicates), that is, the pixel sets of the respective bone models are mapped to the final common bone chains or the final common bone chain duplicate of the new common skeleton.

In one possible implementation, the bones in the bone sets included in the bone models may have different bone identifiers, so that each pixel in the pixel sets of these bone models may be mapped to specific bones through the specific bone identifiers. As mentioned above, the common bones and the common bone duplicates can also have different bone identifiers, and there may be correspondence relationships between the bone identifiers of both the common bones and the common bone duplicates and the bone identifiers of the bones in the bone sets of the bone models, so that after the duplication of a conflicting bone chain is completed, the pixel sets of the respective bone models may be mapped to corresponding common bones or common bone duplicates on the basis of the correspondence relationships.

According to the embodiments of the present disclosure, step 205 may include: for each pixel in the pixel set of one of the two bone models, mapping the bone indicator of each vertex of the pixel to a corresponding common bone in a corresponding common bone chain among the final common bone chains, and mapping the bone indicator of each vertex of the pixel to a corresponding common bone in a corresponding common bone chain among the final common bone chain duplicates.

In one possible implementation, each vertex of a pixel may have a bone indicator and weight attribute, where the bone indicator may be used for indicating the bone identifier of the bone corresponding to the vertex, while the weight attribute may indicate the influence weight of the deformations of the respective bones on the vertex (for example, deformation of the head may not have any influence on a vertex of a pixel of the left foot, so that the influence weight value of a head bone on the vertex of the pixel of the left foot may be zero), with reference to FIG. 4C. Therefore, the vertexes of the pixels may be mapped to the specific bones through their bone indicators, and the deformations of the bones may affect deformations of the vertexes through the weight attributes.

As mentioned above, the pixel sets of the respective bone models are mapped to the final common bone chains or the final common bone chain duplicates, which may include: modifying the bone indicator of each vertex of each pixel in the pixel sets of the respective bone models to be the bone identifier of the corresponding common bone in the corresponding common bone chains or the common bone chain duplicates. It may be regarded as common bone or common bone duplicate skinning, so that the transformation of the common bone leads to the deformation of the vertex of the pixel.

In addition, the weight attributes of these vertexes may also be modified accordingly, including: redetermining weight attributes for the vertexes of the pixels corresponding to the common bone duplicates in the final common bone chain duplicates, such as duplicating the weight attributes of the vertexes of the pixels mapped to the original common bones corresponding to the final common bone duplicates, so that the bone animations of the respective bone models can be presented by the unique common bone or common bone duplicate corresponding to the bone models, thereby repairing animation information in the bone information reconstruction stage shown in FIG. 2B.

In the above-mentioned process of duplicating the conflicting bone chain, the newly generated common skeleton may include some redundant bones on the basis of the method for determining the final common bone chains. For example, in a case that the determined final common bone chains are of the tree-like structure as described above, the to-be-confirmed common bone chain determined for each common bone may be a common bone chain that takes the common bone as a start point and includes all the lower common bones of the common bone. Although some of the common bone chains have been removed for the case where the inclusion relationship exists, since the to-be-confirmed common bone chain determined for each common bone includes the common bone and all the lower common bones of the common bone, there may be a redundant part at a tail end of the to-be-confirmed common bone chain. As a result, the determined common bone chain and the common bone chain duplicate have redundant parts.

For example, for the common skeleton as shown in FIG. 3, when the intersection of the two common bone sets includes the body and the right lower arm (corresponding to the situation described in step 203 above), since the to-be-confirmed common bone chain corresponding to the body may include the to-be-confirmed common bone chain corresponding to the right lower arm, the common bone chain duplicated by the intersection mentioned above is the to-be-confirmed common bone chain corresponding to the body, including the body and all the lower common bones of the body, such as the left upper arm, the head, the right upper arm, the left lower arm, the right lower arm, the left hand, and the right hand. However, as mentioned above, actual conflicting parts of the two bone models are only the body and right lower arm, and do not involve the head, the left upper arm, and the like. If the common bone chain duplicate including all the lower common bones of the body is used in subsequent calculation, the complexity of the subsequent calculation will be increased, and computing resources are wasted. Therefore, redundant bones can be removed from the newly generated common skeleton, as shown in FIG. 2B.

In addition to step 201 to step 205 described above, the bone model combination method of the present disclosure may also include step 206 and step 207.

In step 206, in a case that a redundant bone exists in each final common bone chain duplicate, the redundant bone is removed from the final common bone chain duplicate. The redundant bone includes a redundant common bone; the redundant common bone is located in the final common bone chain duplicate; the redundant common bone does not belong to a common bone set corresponding to the bone model, mapped to the final common bone chain duplicate, in the two bone models; and in a case that the redundant common bone has a lower common bone, the lower common bone of the redundant common bone does not belong to the common bone set either.

For example, in a case that the intersection of the two common bone sets includes the body and the right lower arm, the generated original common bone chain duplicate may include the body and all the lower common bones of the body, that is, {body, left upper arm, head, right upper arm, left lower arm, right lower arm, left hand, and right hand}. Assuming that the common bone set corresponding to the bone model, mapped to the final common bone chain duplicates, of the two bone models is {body, right lower arm, left lower arm}, the redundant bone may include a redundant common bone. The redundant common bone is located in the final common bone chain duplicates and does not belong to the common bone set. There are no lower common bones (such as the head, the left hand, and the right hand). The lower common bones of the left upper arm and the right upper arm belong to the common bone set. In order to establish associations between common bones on non-adjacent layers, the left upper arm and the right upper arm are not determined to be redundant bones. Therefore, for the above situation, the head, the left hand, and the right hand may be removed from the final common bone chain duplicate, thereby generating a new common bone chain duplicate {body, left upper arm, right upper arm, left lower arm, right lower arm} subjected to redundant bone culling processing.

By performing the redundant bone culling processing on the generated common skeleton, the complexity of the subsequent calculation can be reduced, and the computing resources are saved.

As shown in FIG. 2B, after bone information reconstruction is completed to resolve the bone conflict, a mesh combination stage can be performed. Due to the fact that an Application Programming Interface (API) usually accesses the pixels of the meshes through the vertexes of the pixels, it is necessary to combine the vertexes and other attributes of the pixels of all the to-be-combined bone models. Combined rendering can be performed on the bone animations of all the to-be-combined bone models in the scenario, rather than individual rendering, thereby reducing the rendering batches and the computing amount and improving the rendering efficiency.

Therefore, in step 207, the pixel sets respectively included in the plurality of bone models may be combined to combine the plurality of bone models. The pixel sets respectively included in the plurality of bone models are combined, which may include: combining all the vertexes of each pixel in the pixel sets respectively included in the plurality of bone models.

In one possible implementation, the combining all the vertexes of each pixel in the pixel sets respectively included in the plurality of bone models, which may include: combining various attributes of all the vertexes, including but not limited to vertex quantity combination described as an example below, that is, vertex index reconstruction of the mesh combination stage of FIG. 2B.

For example, assuming that there are N to-be-combined bone models (respectively denoted as $Mesh_1$, ..., $Mesh_N$), a vertex quantity respectively corresponding to these bone models is $C_1, ..., C_N$, where a vertex set of each bone model $Mesh_a$ may be denoted as $I_n = 0, ..., C_n$. In addition, assuming that card(P) represents a function used for obtaining a quantity of elements of finite set P, there is $card(I_n) = C_n + 1$.

It is assumed that a vertex set operation function for vertex set P is as follows:

$$Accu(P, c) = \{x_0 + c, x_1 + c, ..., x_n + c\} \quad (1)$$

where $(x_0, \ldots, x_n) \in P$, n = card(P) - 1, so that operation function Accu(P, c) represents adding numerical values of all the elements in vertex set P to c.

In addition, it can also be assumed that a function used for determining a quantity sum of elements of a vertex set in front of vertex set $I_n$:

$$PreS(I, \ n) = \begin{cases} 0, \ n < 2 \\ card(I_{n-1}) + \ PreS(I, n - 1), n \geq 2 \end{cases} \quad (2)$$

As shown in the above formula (2), PreS(I, 0) and PreS(I, 1) are both 0 because there is no vertex set in front of vertex set $I_1$. From vertex set $I_2$, PreS(I, n) represents a total quantity of elements of vertex sets in front of an nth vertex set.

Therefore, a vertex combination operation performed on n vertex sets $I_1, \ldots, I_n$ can be denoted as:

$$Merge(I, n) = \begin{cases} \emptyset, \ n < 1 \\ Merge(I, n - 1) \ \cup \ Accu(I_n, PreS(I, n)), n \geq 1 \end{cases} \quad (3)$$

The above formula (3) is a vertex set generated after the n vertex sets $I_1, \ldots, I_n$ are combined, where an offset can be added to the index of each element in the vertex sets, so that the indexes of vertexes in the generated vertex set are continuous. The offset may be the total quantity of the elements of the vertex sets in front of the vertex set.

FIG. 6 shows a schematic diagram of rendering, invoking, and comparison before and after reconstruction of vertex indexes according to the embodiments of the present disclosure. As shown in FIG. 6, FIG. 6(a) and FIG. 6(b) show schematic diagrams of a rendering invoking program before and after vertex index reconstruction. First five rows in (a) and (b) are preparation work for rendering, including setting up a rendering scenario. From a sixth row, a rendering function is invoked, and (a) and (b) respectively correspond to rendering invocations before and after the application of the vertex index reconstruction in a case that 63924 vertexes are to be rendered. In FIG. 6(a), for the 63924 vertexes, the rendering invocation is performed for five times in total. The number of rendering invocations may be related to a quantity of to-be-combined bone models in a scenario (for example, this scenario corresponds to the combination scenario shown in FIG. 1C(a), which includes five to-be-combined bone models). One rendering invocation needs to be performed on each bone model. After the application of the vertex index reconstruction according to the embodiments of the present disclosure, the number of executions of the rendering invocation has been reduced from 5 to 1, because the indexes of the vertexes of the pixels have been reconstructed on the basis of the processing of the above-mentioned example method, and vertex indexes that can be used in a single rendering invocation are formed.

Therefore, through the vertex index reconstruction operation mentioned above, the number of rendering invocations to the graphics API can be significantly reduced, thereby reducing the rendering batches and the computing amount and improving the rendering efficiency. In addition, combination of other attributes of pixels can also be regarded similarly as combination of sets.

As shown in FIG. 2B, after the combination of the attributes of the pixels is completed, a weight information repair operation and a material identifier generation operation can be performed, including updating weight attribute information of the vertexes of the pixels included in the combined bone models, and generating material identifiers for the pixels for the attributes of the pixels of the various bone models, so as to indicate using which material (for example, skin and cloth) to render the pixels.

In addition to the above operations, the post-processing line shown in FIG. 2B can provide various post-processing operations, including but not limited to vertex scaling, UV flipping, format conversion, wrapping inversion, and post-processing plugin framework. By providing a flexible post-processing framework and a cross-engine bone animation description, it is suitable for various game engines.

Afterwards, for the scenario description construction section in FIG. 2B, FIG. 7 shows a schematic diagram of description and construction of an example scenario according to the embodiments of the present disclosure.

In FIG. 7, the solid diamond line represents that an object at a tail end of the solid diamond line is an indispensable component of an object at a head end (solid diamond) of the solid diamond line. For example, construction of a common skeleton depends on bones, while construction of a mesh depends on vertexes. The hollow diamond line indicates that an object at a tail end of the hollow diamond line is an optional component of an object at a head end (hollow diamond) of the hollow diamond line. For example, the bones can include or exclude a list of bones, that is, their lower bones. The arrow indicates that the object at the tail end cites the object at the head end.

As shown in FIG. 7, a bone animation is composed of a frame list, where each frame can perform deformation of a bone and deformation of a mesh, so the frame may include a bone identifier and change. In one possible implementation, in each frame, vertexes of pixels in meshes are transformed through bone transformations, including changing positions of the vertexes through the bone transformations on the basis of bone indicators (indicating the bone identifiers) and weight attributes of the vertexes of the pixels, thus generating mesh transformation. Through the above general scenario description, scenario information can be flexibly modified and optimized, which gets rid of the limitations of engines and Digital Content Creation (DCC) tools.

Therefore, as mentioned above, according to the bone model combination method of the present disclosure, based on the bone combination process shown in FIG. 2B, a plurality of bone models with bone conflicts in the scenario can be efficiently and accurately combined to better displaying picture animations, thereby improving the user experience. By reducing the number of rendering invocations, the rendering performance can be optimized, and the complexity of bone model combination can be reduced.

FIG. 8 shows a schematic diagram of a bone model combination apparatus 800 according to the embodiments of the present disclosure.

According to the embodiments of the present disclosure, the bone model combination apparatus 800 may include a bone model obtaining module 801, a bone intersection determining module 802, a common bone chain determining module 803, a common bone chain duplication module 804, and a bone mapping building module 805.

According to the embodiments of the present disclosure, the bone model obtaining module 801 may be configured to obtain a plurality of to-be-combined bone models, each of the plurality of to-be-combined bone models including a pixel set, and each bone model corresponding to a common bone set of a common skeleton.

In one possible implementation, the common skeleton may be composed of a plurality of common skeletons, and there is a hierarchical relationship between the plurality of common skeletons. Therefore, the plurality of bone models may be combined on the basis of the common skeleton and the hierarchical relationship thereof.

In one possible implementation, the above-mentioned pixel set may be a set of pixels having a mapping relationship with the common bone set corresponding to the bone model in the common skeleton. The bone identifiers of the vertexes of each pixel in the pixel set may point to bones related to one common bone in the common bone set.

In one possible implementation, the vertexes of each pixel may be blended with one or more bones associated with the pixel. For example, for the vertexes of each pixel of the pixel set, the bones associated with the vertexes are obtained, and influence weight values of the bones associated with the vertexes on the vertexes may be determined. Then, the influence weight value of each bone on the vertex may be blended to determine a vertex after transformation. The method for determining the influence weight values of the bones associated with the vertexes on the vertexes may include determining a contribution degree of each bone to deformation of the vertex as the influence weight value of the bone on the vertex.

According to the embodiments of the present disclosure, the bone intersection determining module 802 may be configured to determine, for any two bone models among the plurality of bone models, an intersection of common bone sets respectively corresponding to the two bone models. In one possible implementation, the bone intersection determining module 802 may perform the operation described with reference to step 202.

In one possible implementation, the intersection of the two common bone sets corresponding to the above two bone models may indicate overlapping bones (namely, conflicting bones) of the two bone models relative to the common skeleton, so that these overlapping bones will cause a combination conflict under a conventional method. Therefore, in a case that the intersection of the two common bone sets corresponding to the two bone models is not an empty set (that is, there is at least one overlapping bone), bone model combination can be performed for the intersection.

According to the embodiments of the present disclosure, the common bone chain determining module 803 may be configured to: in a case that the intersection includes common bones, determine, for all the common bones in the intersection, final common bone chains. In one possible implementation, the common bone chain determining module 803 may perform the operation described with reference to step 203.

In addition, as an example, for each common bone among all the common bones, the common bone and all lower common bones corresponding to the common bone in the common skeleton may also be taken as a to-be-confirmed common bone chain. for any two to-be-confirmed common bone chains among all the to-be-confirmed common bone chains corresponding to all the common bones, removing, in a case that the two to-be-confirmed common bone chains have an inclusion relationship, a to-be-confirmed common bone chain with fewer common bones from the two to-be-confirmed common bone chains to obtain the final common bone chains, where the upper common bones and the lower common bones of the final common bone chains are determined on the basis of the hierarchical relationship.

According to the embodiments of the present disclosure, the common bone chain duplication module 804 may be configured to: generate final common bone chain duplicates on the basis of the final common bone chains, and bind the final common bone chain duplicates to upper common bones of the final common bone chains. In one possible implementation, the common bone chain duplication module 804 may perform the operation described with reference to step 204.

In one possible implementation, the final common bone chain duplicates may include common bone duplicates that correspond to the original common bones but have different bone identifiers, and arrangement (namely, the hierarchical relationship) of these common bone duplicates in the final common bone chain duplicates is consistent with arrangement of the corresponding original common bones in the original common bone chains.

In one possible implementation, after the duplication and binding of the common bone chains corresponding to the conflicting bone are completed, in order to display the bone animations of the respective bone models normally, the pixel sets of the respective bone models may be associated with the generated new common skeleton (including the final common bone chains and the final common bone chain duplicates), that is, the pixel sets of the respective bone models are mapped to the final common bone chains or the final common bone chain duplicate.

According to the embodiments of the present disclosure, the bone mapping building module 805 may be configured to: build a mapping between the final common bone chains and the pixel set included in a corresponding bone model of the two bone models, and build a mapping between the final common bone chain duplicates bound with the upper common bones and the pixel set included in a corresponding bone model of the two bone models, so as to combine the two bone models. In one possible implementation, the bone mapping building module 805 may perform the operation described with reference to step 205.

In one possible implementation, the action of mapping the pixel sets of the respective bone models to the final common bone chains or the final common bone chain duplicates may include: for each pixel in the pixel set of one of the two bone models, mapping the bone indicator of each vertex of the pixel to a corresponding common bone in a corresponding common bone chain among the final common bone chains, and mapping the bone indicator of each vertex of the pixel to a corresponding common bone in a corresponding common bone chain among the final common bone chain duplicates. This can be regarded as common bone or common bone duplicate skinning, so that transformation of the common bone causes deformation of the vertexes of the pixel.

In addition, as described above with regard to the bone model combination method, the bone model combination apparatus of the present disclosure can further include a redundant bone culling module 806 and a mesh combination module 807 which are respectively configured to implement step 206 and step 207.

The redundant bone culling module 806 may be configured to: remove, in a case that it is determined that a redundant bone exists in each final common bone chain duplicate, the redundant bone from the final common bone chain duplicate, the redundant bone including a redundant common bone; the redundant common bone being located in the final common bone chain duplicate; the redundant common bone not belonging to a common bone set corresponding to the bone model, mapped to the final common bone chain duplicate, in the two bone models; and in a case that the redundant common bone has a lower common bone, the lower common bone of the redundant common bone not belonging to the common bone set either. By performing the redundant bone culling processing on the generated common skeleton, the complexity of the subsequent calculation can be reduced, and the computing resources are saved.

The mesh combination module 807 may be configured to combine the pixel sets respectively included in the plurality of bone models to combine the plurality of bone models. The pixel sets respectively included in the plurality of bone models are combined, which may include: combining all the vertexes of each pixel in the pixel sets respectively included in the plurality of bone models.

In one possible implementation, the action of combining all the vertexes of each pixel in the pixel sets respectively included in the plurality of bone models, which may include: combining various attributes of all the vertexes. The attributes of the vertexes include vertex indexes, positions, normals, bone indicators, bone weight attributes, and the like.

According to another aspect of the present disclosure, a bone model combination device is further provided. FIG. 9 shows a schematic diagram of a bone model combination device 2000 according to the embodiments of the present disclosure.

As shown in FIG. 9, the bone model combination device 2000 may include one or more processors 2010 and one or more memories 2020. The memory 2020 stores a computer-readable code, and the computer-readable code, when run on the one or more processors 2010, may perform the above-mentioned bone model combination method.

The processor in the embodiments of the present disclosure may be an integrated circuit chip, which has a signal processing capability. The above processor may be a general-purpose processor, a digital signal processor (DSP), an application-specific integrated circuit (ASIC), a field-programmable gate array (FPGA) or other programmable logic devices, a discrete gate or transistor logic device, and a discrete hardware component. may implement or perform the methods, steps, and logic block diagrams that are disclosed in the embodiments of the present disclosure. The general-purpose processor may be a microprocessor, any conventional processor, or the like. The general-purpose processor may be an X86 architecture or an ARM architecture.

Generally, the various exemplary embodiments of the present disclosure can be implemented in hardware or dedicated circuits, software, firmware, logic, or any combination thereof. Some aspects can be implemented in hardware, while others can be implemented in firmware or software that can be executed by controllers, microprocessors, or other computing devices. When various aspects of the embodiments of the present disclosure are illustrated or described as block diagrams, flowcharts, or some other graphical representations, it will be understood that the blocks, apparatuses, systems, techniques, or methods described herein can be implemented as non-limiting examples in hardware, software, firmware, a dedicated circuit or logic, general hardware, a controller, other computing devices, or some combinations thereof.

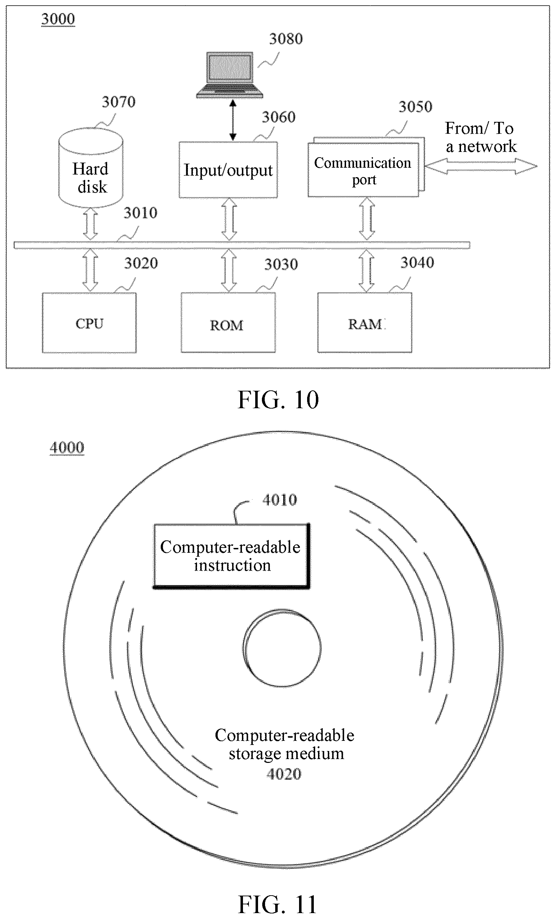

For example, the method or apparatus according to the embodiments of the present disclosure can also be implemented with architecture of a computing device 3000 shown in FIG. 10. That is, the structure of the bone model combination device may be as shown in FIG. 10. As shown in FIG. 10, the computing device 3000 can include a bus 3010, one or more central processing units (CPUs) 3020, a read-only memory (ROM) 3030, a random-access memory (RAM) 3040, a communication port 3050 connected to a network, an input/output component 3060, a hard disk 3070, and the like. A storage device, such as the ROM 3030 or the hard disk 3070, in the computing device 3000 can store various data or files used for processing and/or communication of the bone model combination method provided in the present disclosure, as well as program instructions executed by the CPUs. The computing device 3000 can also include a user interface 3080. Of course, the architecture shown in FIG. 9 is only exemplary. During implementation different devices, one or more components in the computing device shown in FIG. 10 can be omitted according to actual needs.

According to still another aspect of the present disclosure, a computer-readable storage medium is further provided. FIG. 11 shows a schematic diagram 4000 of a storage medium according to the present disclosure.

As shown in FIG. 11, the computer storage medium 4020 stores computer-readable instructions 4010. The computer-readable instructions 4010, when executed by a processor, may perform the bone model combination method according to the embodiments of the present disclosure described with reference to the foregoing accompanying drawings. The computer-readable storage medium in the embodiments of the present disclosure may be a volatile memory or a nonvolatile memory, or may include both a volatile memory and a nonvolatile memory. The nonvolatile memory may include a ROM, a programmable ROM (PROM), an electrically programmable ROM (EPROM), an electrically erasable programmable ROM (EEPROM), or a flash memory. The volatile memory may include a RAM, which is used as an external cache. Through illustrative but non-restrictive description, RAMs in many forms, for example, a static RAM (SRAM), a dynamic RAM (DRAM), a synchronous DRAM (SDRAM), a double data rate SDRAM (DDRSDRAM), an enhanced SDRAM (ESDRAM), a synchronous link DRAM (SLDRAM), and a direct rambus RAM (DRRAM), are available. The memory in the method described herein includes but is not limited to these memories and any other suitable types. The memory in the method described herein includes but is not limited to these memories and any other suitable types.

The embodiments of the present disclosure further provide a computer program product or a computer program. The computer program product or computer program includes computer instructions which are stored in a computer-readable storage medium. A processor of a computer device reads the computer instructions from the computer-readable storage medium and executes the computer instructions, causing the computer device to perform the bone model combination method according to the embodiments of the present disclosure.

Embodiments of the present disclosure provide a bone model combination method, apparatus and device, and a computer-readable storage medium.

Compared with the traditional bone model combination method, the method provided in the embodiments of the present disclosure can integrally maintain all bone models corresponding to the same common bone and achieve all corresponding bone animations, which avoids bone model loss and animation playing errors due to the bone conflicts.

The method provided by the embodiments of the present disclosure determines several bone models corresponding to a same common bone from a plurality of to-be-combined bone models, and duplicates and binds a common bone chain for the bone models to build mappings respectively between pixel sets included in bone models having bone conflicts and corresponding common bones in a common skeleton, thereby achieving combination of a plurality of bone models having bone conflicts. By the method of the embodiments of the present disclosure, bone models can be efficiently and accurately combined in a case that the plurality of to-be-combined bone models have the bone conflicts, so as to achieve better picture animation displaying to improve the user experience. The method of the embodiments of the present disclosure is applicable to combining complicated bone models and multi-character bone models, and is decoupled from a game engine and tool. In addition, the method can also optimize the rendering performance and reduce the complexity of bone model combination.

The flowcharts and block diagrams in the accompanying drawings illustrate possible system architectures, functions and operations that may be implemented by a system, a method, and a computer program product according to various embodiments of the present disclosure. In this regard, each block in a flowchart or a block diagram may represent a module, a program, or a part of a code. The module, the program, or the part of the code includes at least one executable instruction used for implementing specified logic functions. In some implementations used as substitutes, functions annotated in blocks may alternatively occur in a sequence different from that annotated in an accompanying drawing. For example, actually two boxes shown in succession may be performed basically in parallel, and sometimes the two boxes may be performed in a reverse sequence. This is determined by a related function. Each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

Generally, the various exemplary embodiments of the present disclosure can be implemented in hardware or dedicated circuits, software, firmware, logic, or any combination thereof. Some aspects can be implemented in hardware, while others can be implemented in firmware or software that can be executed by controllers, microprocessors, or other computing devices. When various aspects of the embodiments of the present disclosure are illustrated or described as block diagrams, flowcharts, or some other graphical representations, it will be understood that the blocks, apparatuses, systems, techniques, or methods described herein can be implemented as non-limiting examples in hardware, software, firmware, a dedicated circuit or logic, general hardware, a controller, other computing devices, or some combinations thereof.

The example embodiments of the present disclosure described in detail above are only illustrative and not restrictive. A person skilled in the art should understand that various modifications and combinations of these embodiments or their features can be made without departing from the principles and spirit of the present disclosure, and such modifications should fall within the scope of the present disclosure.

**Claims**

1. A method of combining bone models, the method being executable by an electronic device and comprising:

    obtaining a plurality of bone models representing a common skeleton, each comprising a pixel set;
    determining, for each pair of bone models from the plurality of bone models, a common bone set comprising pixels indicating at least one common bone between the respective pair of bone models;
    determining, based on the common bone set, a common bone chain;
    generating a common bone chain duplicate based on the common bone chain, and attaching the common bone chain duplicate to at least one upper common bone of the common bone chain; and
    constructing a mapping relationship between the common bone chain and a pixel set included in a corresponding bone model of the respective pair of bone models, and constructing a mapping relationship between the common bone chain duplicate and the pixel set included in the corresponding bone model of the respective pair of bone models, to combine the respective pair of bone models.

2. The method according to claim 1, wherein

    the common skeleton is composed of a plurality of common bones having a hierarchical relationship;
    each of the plurality of bone models further comprises a bone set corresponding to a common bone set of the common skeleton; and
    the determining, based on the common bone set, the common bone chain comprises:
    determining, for all the common bones, the common bone chain based on the hierarchical relationship between the common bones.

3. The method according to claim 2, wherein the determining, for the all the common bones, the common bone chain based on the hierarchical relationship between the common bones comprises:

    determining a common bone chain set covering the common bones and having a smallest quantity of common bone chains; and
    determining the common bone chain according to the common bone chain set, wherein the same common bone chain does not contain a plurality of common bones belonging to a same layer.

4. The method according to claim 2, wherein the determining, for the all the common bones, the common bone chain based on the hierarchical relationship between the common bones comprises:

    setting, for each common bone among the common bones, the common bone and at least one lower common bone corresponding to the common bone in the common skeleton as a to-be-confirmed common bone chain; and
    for any two to-be-confirmed common bone chains among the to-be-confirmed common bone chains, removing, in response to a determination that the two to-be-confirmed common bone chains have an inclusion relationship, a to-be-confirmed common bone chain with fewer common bones from the two to-be-confirmed common bone chains to obtain the common bone chain,
    wherein the at least one upper common bone and the at least one lower common bone of the common bone chain are determined based on the hierarchical relationship.

5. The method according to claim 2, wherein the generating the common bone chain duplicate comprises:

    duplicating the common bones in the common bone chain and a hierarchical relationship of the common bones to obtain the common bone chain duplicate,

wherein each common bone in the common bone chain duplicate and each common bone in the common bone chain have different bone identifiers.

6. The method according to claim 5, the method further comprising:

constructing a temporary upper common bone in response to a determination that the common bone chain does not have upper common bones,
the attaching the common bone chain duplicate at least one upper common bone comprising:
respectively attaching the common bone chain and the common bone chain duplicate to the temporary upper common bone.

7. The method according to claim 1, wherein

each pixel in a pixel set comprises a plurality of vertexes, and each vertex has a bone indicator indicating a bone identifier corresponding to the vertex; and
the constructing the mapping relationship between the common bone chain and the pixel set of the corresponding bone model of the respective pair of bone models, and the constructing the mapping relationship between the common bone chain duplicate and the pixel set of the corresponding bone model of the respective pair of bone models comprises:
for each pixel in the pixel set of one of the two bone models, mapping the bone indicator of each vertex of the pixel to a corresponding common bone in a corresponding common bone chain in the common bone chain, and mapping the bone indicator of each vertex of the pixel to a corresponding common bone in a corresponding common bone chain in the common bone chain duplicate.

8. The method according to claim 1, the method further comprising:

in response to a determination that a redundant bone exists in a common bone chain duplicate, removing the redundant bone from the common bone chain duplicate,
the redundant bone comprising a redundant common bone located in the common bone chain duplicate and not belonging to a common bone set corresponding to a corresponding bone model.

9. The method according to any one of claims 1 to 8, further comprising:

combining the pixel sets respectively included in the plurality of bone models to combine the plurality of bone models; and
the combining the pixel sets comprising:
combining all vertexes of each pixel in the pixel sets respectively included in the plurality of bone models.

10. The method according to any one of claims 1 to 8, wherein

for the pixel set included in each bone model, the pixel set is a set of pixels having a mapping relationship with a common bone set corresponding to the bone model; and
bone identifiers of vertexes of each pixel in the pixel set point to bones related to one common bone in the common bone set.

11. The method according to any one of claims 1 to 8, further comprising:

obtaining, for vertexes of each pixel in a pixel set, bones associated with the vertexes;
determining influence weight values of the bones associated with the vertexes on the vertexes; and
blending the influence weight value of each bone on the vertex to determine a vertex after transformation.

12. An apparatus for combining bone models, comprising:

a bone model obtaining module, configured to obtain a plurality of bone models representing a common skeleton, each comprising a pixel set;
a bone intersection determining module, configured to determine, for each pair of bone models from the plurality of bone models, a common bone set comprising pixels indicating at least one common bone between the respective pair of bone models;

a common bone chain determining module, configured to: determine, based on the common bone, a common bone chain;

a common bone chain duplication module, configured to: generate a common bone chain duplicate based on the final common bone chain, and attach the common bone chain duplicate to at least one upper common bone of the common bone chain; and

a bone mapping constructing module, configured to: construct a mapping relationship between the common bone chain and a pixel set included in a corresponding bone model of the respective pair of bone models, and construct a mapping relationship between the common bone chain duplicate and the pixel set included in the corresponding bone model of the respective pair of bone models, to combine the respective pair of bone models.

13. The apparatus according to claim 12, wherein

the common skeleton is composed of a plurality of common bones having a hierarchical relationship;

each of the plurality of bone models further comprises a bone set corresponding to a common bone set of the common skeleton; and

the determining, based on the common bone, the common bone chain comprises:

determining, for all the common bones, the common bone chain based on the hierarchical relationship between the common bones.

14. A device for combining bone models, comprising:

one or more processors; and

one or more memories, storing a computer-executable program, the processor, when executing the computer-executable program, performing the method according to any one of claims 1 to 11.

15. A computer program product, the computer program product being stored on a computer-readable storage medium and comprising computer instructions, the computer instructions, when run by a processor, causing a computer device to perform the method according to any one of claims 1 to 11.

16. A computer-readable storage medium, storing computer-executable instructions, and the instructions, when executed by a processor, being used for implementing the method according to any one of claims 1 to 11.

100

FIG. 1A

FIG.1B

(a)

(b)

(c)

FIG.1C

<u>200</u>

S201 — Obtain a plurality of to-be-combined bone models, each of the plurality of to-be-combined bone models including a pixel set, and each bone model corresponding to a common bone set of a common skeleton

S202 — Determine, for any two bone models among the plurality of bone models, an intersection between two common bone sets respectively corresponding to the two bone models

S203 — In a case that the intersection includes common bones, determine, for all the common bones in the intersection, final common bone chains

S204 — Generate final common bone chain duplicates on the basis of the final common bone chains, and binding the final common bone chain duplicates to upper common bones of the final common bone chains

S205 — Build a mapping between the final common bone chains and the pixel set included in a corresponding bone model of the two bone models, and build a mapping between the final common bone chain duplicates bound with the upper common bones and the pixel set included in a corresponding bone model of the two bone models, so as to combine the two bone

FIG.2A

```
                              ┌──────────┐
                              │  Start   │
                              └──────────┘
                                   │
┌──────────────┬────────────────────────────────────────────────────────────┐
│              │          ┌────────────┐   ┌───────────┐   ┌───────────┐      │
│              │          │  Scenario  │   │Bone model │   │Bone model │      │
│Initialization│          │description │──▶│collection │──▶│ filtering │      │
│              │          │construction│   │           │   │           │      │
│              │          └────────────┘   └───────────┘   └───────────┘      │
└──────────────┴────────────────────────────────────────────────────────────┘

┌──────────────┬────────────────────────────────────────────────────────────┐
│   Bone       │        ┌────────────┐   ┌───────────┐   ┌───────────┐        │
│ information   │        │ Conflicting│   │ Redundant │   │ Animation │        │
│reconstruction │        │ bone chain │──▶│bone culling│──▶│information│        │
│              │        │ duplication│   │           │   │  repair   │        │
│              │        └────────────┘   └───────────┘   └───────────┘        │
└──────────────┴────────────────────────────────────────────────────────────┘

┌──────────────┬────────────────────────────────────────────────────────────┐
│    Mesh      │  ┌────────────┐  ┌───────────┐  ┌─────────┐  ┌──────────┐    │
│ combination  │  │Vertex index│  │   Pixel   │  │ Weight  │  │ Material │    │
│              │  │reconstruc- │─▶│ attribute │─▶│informa- │─▶│identifier│    │
│              │  │   tion     │  │combination│  │tion repair│  │generation│   │
│              │  └────────────┘  └───────────┘  └─────────┘  └──────────┘    │
└──────────────┴────────────────────────────────────────────────────────────┘

┌──────────────┬────────────────────────────────────────────────────────────┐
│   Post-      │ ┌────────┐  ┌─────────┐  ┌─────────┐  ┌─────────┐ ┌──────────┐│
│ processing   │ │ Vertex │  │   UV    │  │ Format  │  │Wrapping │ │  Post-   ││
│   line       │ │ scaling│  │flipping │  │conversion│  │inversion│ │processing││
│              │ │        │  │         │  │         │  │         │ │ plugin   ││
│              │ │        │  │         │  │         │  │         │ │framework ││
│              │ └────────┘  └─────────┘  └─────────┘  └─────────┘ └──────────┘│
└──────────────┴────────────────────────────────────────────────────────────┘
                              ┌──────────┐
                              │   End    │
                              └──────────┘
```

FIG.2B

FIG. 3

FIG. 4A

FIG. 4B

FIG. 4C

Head

Right upper
arm 2

Left upper
arm

Right
upper arm

Body

Right lower
arm 2

Left lower
arm

Right
lower arm

Right hand
2

Left hand

Right hand

**Pelvis**

Left thigh    Right thigh

Left calf    Right calf

Left foot    Right foot

FIG. 5

| 0 | Capture Start |
|---|---|
| 6-14 | rendererSubmit |
| 16-92 | ⌄ 0 |
| 19 | ClearRenderTargetView({ 0.18824, 0.18824, 0.18824, 1.00 }) |
| 20 | ClearDepthStencilView(1.00) |
| 48 | DrawIndexed(4212) |
| 54 | ├ DrawIndexed(10686) |
| 60 | DrawIndexed(5862) |
| 66 | DrawIndexed(41448) |
| 72 | DrawIndexed(1716) |
| 94-137 | ＞255   ImGui |
| 142 | Present(**Swapchain Image 10099**⌀) |

(a)

| 0 | Capture Start |
|---|---|
| 2-10 | rendererSubmit |
| 12-64 | ⌄ 0 |
| 15 | ClearRenderTargetView({ 0.18824, 0.18824, 0.18824, 1.00 }) |
| 16 | ClearDepthStencilView(1.00) |
| 44 | └ DrawIndexed(63924) |
| 66-109 | ＞255   ImGui |
| 114 | Present(**Swapchain Image 6767**⌀) |

(b)

FIG. 6

| Animation |
|---|
| Frame list |

| Common bone |
|---|
| Bone hierarchy |

| Mesh |
|---|
| Vertex list |

| Frame |
|---|
| Bone identifier
Transformation |

| Bone |
|---|
| Transformation
Bone list |

| Vertex |
|---|
| Position
Bone identifier
Bone weight |

## FIG. 7

**Bone model combination apparatus 800**

| Bone intersection determining module 801 | Bone model obtaining module 802 | Common bone chain determining module 803 |
|---|---|---|

| Common bone chain duplication module 804 | Bone mapping building module 805 |
|---|---|

## FIG. 8

2000

| Processor | 2010 |
|---|---|
| Memory | 2020 |

## FIG. 9

3000

3080

3070

Hard disk

3010

3020

CPU

3060

Input/output

3050

Communication port

From/ To a network

3030

ROM

3040

RAM

FIG. 10

4000

4010

Computer-readable instruction

Computer-readable storage medium
4020

FIG. 11

## INTERNATIONAL SEARCH REPORT

| | International application No. |
|---|---|
| | **PCT/CN2023/074848** |

**A. CLASSIFICATION OF SUBJECT MATTER**

G06T13/00(2011.01)i;G06T3/00(2006.01)n

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE; 百度, BAIDU; 读秀, DUXIU: 腾讯科技, 骨骼模型, 合并, 组合, 冲突, 网格, 蒙皮, 皮肤, 复制, 副本, 链, 公共, skeleton model, combine, merge, mesh, skin, copy, chain, public

**C. DOCUMENTS CONSIDERED TO BE RELEVANT**

| Category* | Citation of document, with indication, where appropriate, of the relevant passages | Relevant to claim No. |
|---|---|---|
| A | CN 112489172 A (HANGZHOU ELECTRONIC SOUL NETWORK TECHNOLOGY CO., LTD.) 12 March 2021 (2021-03-12) description, paragraphs [0034]-[0056], and figures 1-5 | 1-16 |
| A | CN 111161427 A (BEIJING DAMA QIANKUN TECHNOLOGY CO., LTD.) 15 May 2020 (2020-05-15) entire document | 1-16 |
| A | CN 105976417 A (TENCENT TECHNOLOGY (SHENZHEN) CO., LTD.) 28 September 2016 (2016-09-28) entire document | 1-16 |
| A | US 2017032579 A1 (DELFT UNIVERSITY OF TECHNOLOGY) 02 February 2017 (2017-02-02) entire document | 1-16 |

☑ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 March 2023** | **06 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

| | International application No. |
| --- | --- |
| | **PCT/CN2023/074848** |

### C.    DOCUMENTS CONSIDERED TO BE RELEVANT

| Category* | Citation of document, with indication, where appropriate, of the relevant passages | Relevant to claim No. |
| --- | --- | --- |
| A | 季卓尔 等 (JI, Zhuoer et al.). "基于可编程图形处理器的骨骼动画算法及其比较 (Programmable GPU Technology in Skeletal Animations And Their Comparison)" 计算机工程与设计 *(Computer Engineering and Design)*, Vol. 29, No. 21, 16 November 2008 (2008-11-16), ISSN: 1000-7024,     pages 5550-5554 | 1-16 |

**INTERNATIONAL SEARCH REPORT**
Information on patent family members

International application No.

**PCT/CN2023/074848**

| Patent document cited in search report | | | Publication date (day/month/year) | Patent family member(s) | | | Publication date (day/month/year) |
|---|---|---|---|---|---|---|---|
| CN | 112489172 | A | 12 March 2021 | None | | | |
| CN | 111161427 | A | 15 May 2020 | None | | | |
| CN | 105976417 | A | 28 September 2016 | US | 2018357808 | A1 | 13 December 2018 |
| | | | | US | 10332298 | B2 | 25 June 2019 |
| | | | | WO | 2017202383 | A1 | 30 November 2017 |
| | | | | CN | 105976417 | B | 12 June 2020 |
| US | 2017032579 | A1 | 02 February 2017 | US | 9928663 | B2 | 27 March 2018 |
| | | | | WO | 2017019531 | A1 | 02 February 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210353097